# EUROPÄISCHE PATENTSCHRIFT

(11) **EP 0 901 916 B1**
(45) Veröffentlichungstag und Bekanntmachung des Hinweises auf die Patenterteilung: **05.12.2001**
(21) Anmeldenummer: 98116910.5
(22) Anmeldetag: 08.09.1998
(51) Int. Cl.: B60D 1/02

(54) **Anhängekupplung für ein Zugfahrzeug**
Trailer hitch for a towing vehicle
Attelage de remorque pour un véhicule tracteur

(30) Priorität: 10.09.1997 DE 29716295 U
(43) Veröffentlichungstag der Anmeldung: 17.03.1999
(73) Patentinhaber: Sauermann, Hans, D-86558 Freinhausen (DE)
(72) Erfinder: Sauermann, Hans, D-86558 Freinhausen (DE)
(74) Vertreter: Sasse, Volker, Dipl.-Ing.

(56) Entgegenhaltungen:
- DE-A- 2 012 321
- DE-A- 4 310 263

## Beschreibung

Die Erfindung betrifft eine Anhängekupplung gemäß dem Oberbegriff des Patentanspruchs 1.

Aus der DE 42 22 343 C2 ist eine Anhängekupplung bekannt, bei der ein Kuppelzapfen von einem Schwenkarm verschiebbar gehalten ist. Der Kuppelzapfen weist hierzu eine Längsnut auf, die von einem Querbolzen überbrückt ist. Dieser Querbolzen durchdringt eine am Schwenkarm vorgesehene Kulisse, die die Schwenkbewegung des Arms in eine Verschiebebewegung des Kuppelzapfens umsetzt. Um den Kuppelzapfen sicher in der Kuppelstellung zu halten, ist er mit der Kraft einer vorgespannten Feder beaufschlagt. In der Praxis kommen je nach Anwendungszweck unterschiedlich geformte Kuppelzapfen zum Einsatz, so daß dieser relativ häufig gewechselt werden muß. Hierzu ist es bei dieser Kupplung erforderlich, nahezu den gesamten Kupplungskopf zu zerlegen, was aufgrund der im Kupplungskopf vorgesehenen vorgespannten Federn relativ aufwendig und gleichzeitig unfallträchtig ist. Aus dem gleichen Grund gestaltet sich der anschließende Zusammenbau des Kupplungskopfes schwierig, was den erforderlichen Wechsel des Kuppelzapfens insgesamt aufwendig macht.

Der Erfindung liegt die Aufgabe zugrunde, eine Anhängekupplung der eingangs genannten Art zu schaffen, bei der der Kuppelzapfen in einfacher Weise gewechselt werden kann.

Diese Aufgabe wird erfindungsgemäß mit den Merkmalen des Patentanspruchs 1 gelöst.

Die im Kupplungskopf vorgesehene Durchgangsbohrung fluchtet in einer Stellung des Kuppelzapfens mit dem Bolzen, so daß in dieser Stellung der Bolzen ohne Öffnen des Kupplungskopfes aus dem Kuppelzapfen entfernt werden kann. Hierzu genügt es, wenn die Durchgangsbohrung des Kupplungskopfes an einer Seite des Kuppelzapfens größer oder gleich dem Bolzendurchmesser ist, so daß der Bolzen in Richtung dieser Seite herausgetrieben werden kann. In der gegenüberliegenden Wand des Kupplungskopfes kann die Durchgangsbohrung auch kleiner als der Bolzendurchmesser ausgelegt sein, da hier lediglich ein Dom zum Heraustreiben des Bolzens durchgesteckt werden muß. Alternativ könnte die Durchgangsbohrung zu beiden Seiten des Kuppelzapfens auch gleich dimensioniert werden, so daß der Bolzen in beliebiger axialer Richtung entfernt werden kann. Da der Bolzen lediglich aus der Durchgangsbohrung herausgetrieben bzw. in diese hineingetrieben werden muß, kann der Kuppelzapfen auf einfache Weise gewechselt werden, ohne daß hierzu der Kupplungskopf geöffnet und umständlich alle Teile entfernt werden müßten oder gar der ganze Kupplungskopf demontiert werden müßte. Diesen einfachen Wechselvorgang kann jeder Laie durchführen. Man erspart sich mit dieser Erfindung einen teueren und sehr zeitraubenden Werkstattbesuch.

Zur Vereinfachung des Entfernens bzw. Einbringens des Bolzens wird gemäß Anspruch 2 vorgeschlagen, die Durchgangsbohrung des Kupplungskopfes derart anzuordnen, daß sie in der Kuppelstellung oder in der Lösestellung des Kuppelzapfens mit dem Bolzen fluchtet. Damit kann das Entfernen bzw. Einbringen des Bolzens in einer stabilen und damit definierten Endlage des Kuppelzapfens erfolgen, was dessen Wechsel erheblich vereinfacht. Bevorzugt fluchtet die Durchgangsbohrung des Kupplungskopfes mit dem Bolzen in der Kuppelstellung des Kuppelzapfens, da dann beim Heraustreiben des Bolzens der Kuppelzapfen der Zugösenauflage des Kupplungsmauls gehalten ist und somit beim Lösen der Verbindung mit dem Schwenkarm keine unerwartete Fallbewegung ausführen kann. Zusätzlich ergibt sich der Vorteil, daß bei der anschließenden Montage des Kuppelzapfens dieser korrekt in Lage gehalten wird, so daß der Bolzen einfach in die Durchgangsbohrung des Kuppelzapfens eingetrieben werden kann.

Alternativ ist es denkbar, die Ausführung gemäß Anspruch 3 auszubilden. Die Mittenstellung wird der Kuppelzapfen nicht selbsttätig einnehmen, so daß in dessen Endlagen der Bolzen seine Lagesicherung durch die Wandung des Kupplungskopfes erhält. Es ist dadurch ein selbsttätiges Herausrutschen des Bolzens aus der Durchgangsbohrung des Kuppelzapfens unmöglich. Andererseits ist mit dem Handhebel der Kuppelzapfen einfach in die Mittenstellung zu bringen, in der mit einem Dorn der Bolzen herausgedrückt und der Kuppelzapfen ohne Aufwand ausgetauscht werden kann.

Grundsätzlich könnte die Durchgangsbohrung des Kupplungskopfes einen konstanten Durchmesser aufweisen, der größer oder gleich dem Bolzendurchmesser ist. Damit könnte der Bolzen in beide Richtungen aus dem Kuppelzapfen herausgetrieben werden. Gemäß Anspruch 4 wird jedoch vorgeschlagen, die Durchgangsbohrung an einer Seite des Kuppelzapfens größer und an der gegenüberliegenden Seite kleiner als den Bolzendurchmesser zu dimensionieren. Damit kann der Bolzen zwar nur in Richtung der Seite mit dem größeren Durchmesser der Durchgangsbohrung des Kupplungskopfes entfernt bzw. eingeführt werden, diese Maßnahme stellt sicher, daß der Bolzen nicht versehentlich in die in Eintreibrichtung befindliche Bohrung des Kupplungskopfes eingetrieben werden kann. Grundsätzlich wäre es auch vorstellbar, in der Durchgangsbohrung des Kuppelzapfens einen Endanschlag vorzusehen, der ein vollständiges Durchdringen der Durchgangsbohrung des Kuppelzapfens vom Bolzen verhindert.

Um einen ausreichend sicheren Halt des Bolzens in der Durchgangsbohrung des Kuppelzapfens zu gewährleisten, wird gemäß Anspruch 5 vorgeschlagen, den Bolzen im Klemmsitz bzw. Reibschluß zu halten. Hierdurch wird sichergestellt, daß der Bolzen in seiner Lage verbleibt, so daß er nicht unbeabsichtigt in die Durchgangsbohrung des Kupplungskopfes eindringen kann. Dies verhindert ein unbeabsichtigtes Verkeilen des Bolzens am Kupplungskopf, was die Funktionstüchtigkeit der Kupplung beeinträchtigen würde.

Alternativ oder zusätzlich wird gemäß Anspruch 6 vorgeschlagen, den Bolzen an mindestens einem Ende gerundet oder kegelig auszubilden. Wandert der Bolzen als Folge von Erschütterungen während der Fahrt in Richtung einer Wandung des Kupplungskopfes, so kann es vorkommen, daß der Bolzen mit seinem Ende in die Durchgangsbohrung des Kupplungskopfes eindringt. Beim nächsten Verstellen des Kuppelzapfens wird der Bolzen durch seine gerundete oder kegelig ausgebildete Endfläche wieder in Richtung der Mittelachse des Kuppelzapfens zurückgedrückt, so daß die Anhängekupplung weiterhin funktionstüchtig bleibt. Ist die im Kupplungskopf vorgesehene Durchgangsbohrung an einer Seite des Kuppelzapfens kleiner als der Bolzendurchmesser dimensioniert, so genügt es, das gegenüberliegende Ende des Bolzens gerundet oder kegelig auszubilden. Für den Fall, daß die im Kupplungskopf vorgesehene Durchgangsbohrung beidseits des Kuppelzapfens größer oder gleich dem Bolzendurchmesser ausgebildet ist, werden vorteilhaft beide Enden des Bolzens gerundet bzw. kegelig ausgebildet.

Insbesondere bei landwirtschaftlichen Fahrzeugen muß die Anhängekupplung unempfindlich gegenüber grober Verschmutzung sein. Um trotz der im Kupplungskopf vorgesehenen Durchgangsbohrung ein Eindringen von Schmutz in den Kupplungskopf zu verhindern, wird gemäß Anspruch 7 vorgeschlagen, in der Durchgangsbohrung des Kupplungskopfes Verschlußmittel vorzusehen. Hierdurch wird der Innenraum des Kupplungskopfes mit dem empfindlichen Betätigungsmechanismus für den Kuppelzapfen ausreichend geschützt, so daß die Anhängekupplung dauerhaft zuverlässig funktioniert. Außerdem wird durch die Verschlußmittel sichergestellt, daß im Kupplungskopf befindliche Schmierfette am Austreten gehindert werden. Vorzugsweise werden die Verschlußmittel von Schraubbolzen gebildet, die in Gewinden der Durchgangsbohrung des Kupplungskopfes gehalten sind. Hierzu sind keine weiteren Sicherungsmittel erforderlich.

Eine besonders vorteilhafte Ausbildung der Verschlußmittel ergibt sich aus Anspruch 8. Hierbei bildet das Verschlußmittel für den Bolzen einen Endanschlag, der ihn an einem zu tiefen Eindringen in die Durchgangsbohrung des Kupplungskopfes hindert. Der Freiraum zwischen dem Ende des Verschlußmittels und der Innenwandung des Kupplungskopfes ist dabei derart dimensioniert, daß höchstens der gerundete bzw. kegelig ausgebildete Abschnitt des Bolzens in die Durchgangsbohrung des Kupplungskopfes eindringen kann. Hierdurch wird unter allen Umständen ein unerwünschtes Verkeilen des Bolzens in der Durchgangsbohrung verhindert, was eine dauerhafte Funktionstüchtigkeit der Anhängekupplung sicherstellt. Ist die Durchgangsbohrung des Kupplungskopfes an einer Seite des Kuppelzapfens kleiner als der Bolzendurchmesser dimensioniert, so genügt es, das gegenüberliegende Verschlußmittel als Endanschlag auszubilden, da der Bolzen nicht in die kleiner dimensionierte Durchgangsbohrung eindringen kann. Ist die Durchgangsbohrung jedoch beidseits des Kuppelzapfens größer als der Bolzendurchmesser dimensioniert, so werden bevorzugt beide Verschlußmittel als Endanschlag ausgebildet.

Es hat sich als sehr vorteilhaft erwiesen, das Verschlußmittel im Kupplungskopf entsprechend Anspruch 9 auszubilden. Durch das bündige Abschließen der Bohrung im Kupplungskopf und zwar bis an die Wandung der Führung des Kuppelzapfens hat der Bolzen keine Möglichkeit, in die Bohrung einzudringen. Das gewährleistet eine einwandfreie Betätigung der Kupplung ohne jegliches Blockieren. Hierbei könnte der Bolzen sogar ohne Reibschluß in dem Kuppelzapfen sitzen, denn ein seitliches Verschieben in den Kupplungskopf ist dem Bolzen nicht möglich.

Schließlich wird gemäß Anspruch 10 vorgeschlagen, den Bolzen an seinen beiden Enden im Kuppelzapfen zu halten. Hierdurch wird sichergestellt, daß der mit der Kulisse versehene Schwenkarm keine Drehmomente auf den Bolzen ausüben kann, so daß sich der Bolzen selbst bei kleinem Außendurchmesser nicht verbiegen kann. Dies stellt sicher, daß der Bolzen selbst nach sehr rauhem Betrieb problemlos entfernt werden kann, ohne den Kupplungskopf zu zerlegen. Außerdem wirkt die Längsnut des Kuppelzapfens, die vom Bolzen überbrückt ist, als Verdrehsicherung für den Kuppelzapfen, so daß dieser stets die gleiche Lage einnimmt.

Ein bevorzugtes Ausführungsbeispiel des Erfindungsgegenstandes wird beispielhaft anhand der Zeichnung erläutert, ohne den Schutzumfang zu beschränken.

Es zeigt
- Figur 1: einen Längsschnitt durch eine Anhängekupplung in der Kuppelstellung des Kuppelzapfens,
- Figur 2: eine gegenüber Figur 1 vergrößerte Schnittdarstellung entlang der Schnittlinie II-II eines Ausschnitts der Anhängekupplung und
- Figur 3: eine alternative Ausführungsform eines Kuppelzapfens.

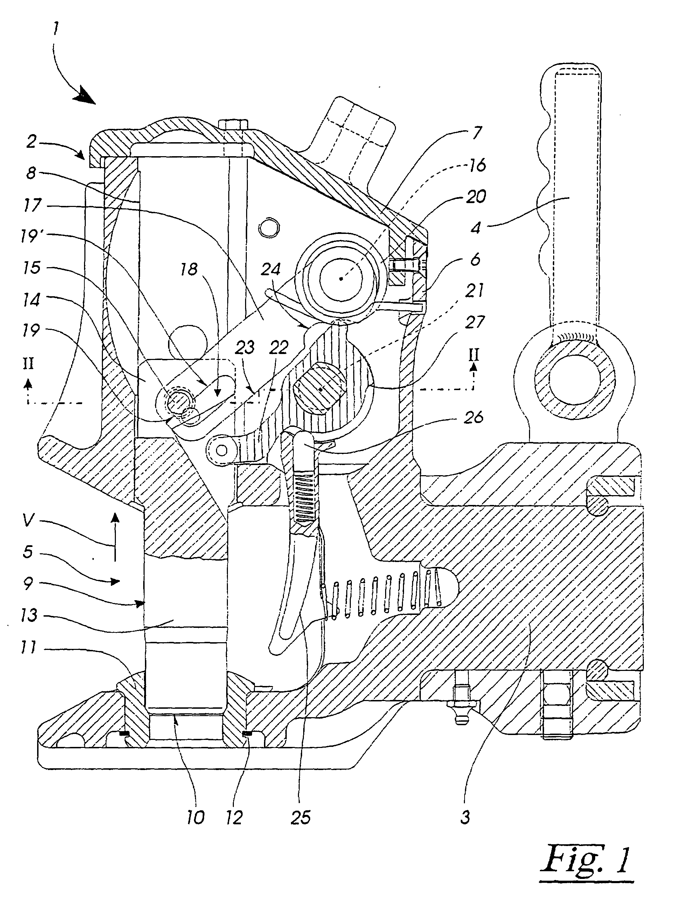

Eine Anhängekupplung 1 gemäß Figur 1 wird von einem Kupplungskopf 2 gebildet, dessen Halteschaft 3 in einer Höhenverstellvorrichtung 4 gehalten ist. Der Kupplungskopf 2 wird von einem Kupplungsmaul 5 und einem an diesem oberseitig angeformten Gehäuse 6 mit abnehmbarem Deckel 7 gebildet. Im Gehäuse 6 ist eine Führung 8 vorgesehen, entlang der ein Kuppelzapfen 9 in Richtung V verschiebbar gehalten ist. In der in Figur 1 dargestellten Kuppelstellung durchdringt der Kuppelzapfen 9 das Kupplungsmaul 5, wobei sein unteres Ende 10 in eine Zugösenauflage 11 eindringt und in ihr in radialer Richtung gehalten ist. Die Zugösenauflage 11 ist mittels eines Sicherungsringes 12 lösbar am Kupplungsmaul 5 gehalten.

Der Kuppelzapfen 9 wird von einem zylindrischen Schaft 13 gebildet, der im oberen Bereich eine Längsnut 14 aufweist, die von einem Bolzen 15 überbrückt ist. Zur Verstellung des Kuppelzapfens 9 ist ein um eine Achse 16 verschwenkbar gehaltener Schwenkarm 17 vorgesehen, der mittels einer Kulisse 18 den Bolzen 15 des Kuppelzapfens 9 ergreift. Die Kulisse 18 ist L-förmig ausgebildet, wobei der Bolzen 15 in der dargestellten Kuppelstellung des Kuppelzapfens 9 einen kurzen Querschenkel 19 der Kulisse 18 durchdringt. Hierdurch ist gewährleistet, daß der Kuppelzapfen 9 während der Fahrt nicht selbständig in die aus dem Kupplungsmaul zurückgezogene Lösestellung geraten kann. Als zusätzliche Sicherung des Kuppelzapfens 9 in der Kuppelstellung ist der Schwenkarm 17 mit einer Feder 20 gegen den Uhrzeigersinn beaufschlagt, so daß der Bolzen 15 in der dargestellten Kuppelstellung des Kuppelzapfens stets am Ende des Querschenkels 19 der Kulisse 18 anliegt.

Um den Kuppelzapfen 9 von der dargestellten Kuppelstellung durch Verschieben in Richtung V in die Lösestellung zu bringen, ist ein um eine gesonderte Achse 21 schwenkbar gehaltener Lösehebel 22 vorgesehen, der den Schwenkarm 17 an seiner Unterkante 23 erfaßt. Durch Verschwenken des Lösehebels 22 im Uhrzeigersinn wird der Schwenkarm 17 ebenfalls im Uhrzeigersinn mitverschwenkt, wobei der Bolzen 15 von dem Querschenkel 19 in einen Längsschenkel 19' der Kulisse 18 eindringt. In diesem Längsschenkel 19' ist der Bolzen 15 frei verschiebbar, so daß der Kuppelzapfen 9 bei weiterer Verschwenkung des Lösehebels 22 in die Lösestellung verschoben wird, in der der Lösehebel 22 in eine Rastvertiefung 24 des Schwenkarms 17 eindringt.

Um den Kuppelzapfen 9 wieder in die entgegen der Verschieberichtung V Kuppelstellung zu bringen, wird eine nicht dargestellte Kuppelöse in das Kupplungsmaul 5 eingetaucht, die eine Tastzunge 25, die an der Achse 21 des Lösehebels 22 verschwenkbar gehalten ist, gegen den Uhrzeigersinn verschwenkt. Dabei drückt eine Rastnase 26 der Tastzunge 25 gegen einen Anschlag 27 des Lösehebels 22, so daß dieser um einen kleinen Winkel im Uhrzeigersinn verschwenkt wird. Hierdurch wird der Lösehebel 22 aus der Rastvertiefung 24 des Schwenkarmes 17 herausgedrückt, so daß der Schwenkarm 17 unter der Kraftwirkung der vorgespannten Feder 20 entgegen dem Uhrzeigersinn verschwenkt wird. Somit gelangt der Kuppelzapfen 9 durch Verschiebung entgegen der Richtung V wieder in die Kuppelstellung.

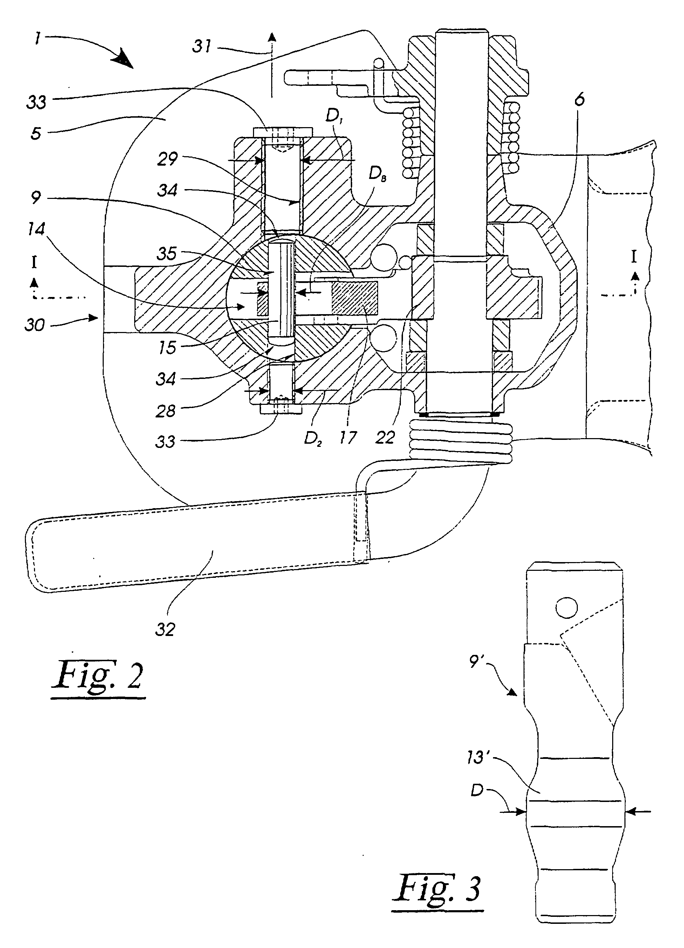

Die weitere Beschreibung der Anhängekupplung erfolgt anhand von Figur 2, wobei gleiche Bezugszeichen gleiche Teile benennen. Um einen einfachen Austausch des Kuppelzapfens 9 zu ermöglichen, ist der Bolzen 15 in einer Durchgangsbohrung 28 des Kuppelzapfens 9 lösbar im Klemmsitz gehalten. In der dargestellten Kuppelstellung des Kuppelzapfens 9 fluchtet der Bolzen 15 mit einer Durchgangsbohrung 29 des Kupplungskopfes 2. Diese Durchgangsbohrung 29 ist dabei als Stufenbohrung ausgebildet und besitzt vom Fahrzeugheck 30 aus gesehen links des Kupplungszapfens 9 einen größeren Durchmesser D₁ als der Bolzendurchmesser D_{B}. Dem gegenüber besitzt die Durchgangsbohrung 29 des Kupplungskopfes 2 an der vom Fahrzeugheck 30 aus gesehen rechten Seite des Kuppelzapfens 9 einen gegenüber dem Bolzendurchmesser D_{B} verringerten Durchmesser D₂. Damit kann der Bolzen 15 einfach mit einem Dorn in Richtung des Pfeiles 31 aus der Durchgangsbohrung 28 des Kuppelzapfens 9 heraugetrieben werden, wodurch die kraftschlüssige Verbindung zwischen dem Kuppelzapfen 9 und dem Schwenkarm 17 aufgehoben ist. Nach dem weiteren Entfernen der Zugösenauflage 11 aus dem Kupplungsmaul 5 kann der Kuppelzapfen 9 einfach nach unten aus dem Kupplungsmaul 5 entnommen werden.

Um das Eindringen von Schmutz in den Innenraum des Gehäuses 6 zu verhindern, ist die Durchgangsbohrung 29 des Kupplungskopfes 2 durch Verschlußmittel 33 in Form von Schrauben beidseits verschließbar. Diese Verschlußmittel 33 verhindern gleichzeitig ein Austreten von Schmierfetten, die zur Verminderung der Reibung des Kuppelzapfens 9 eingesetzt werden, aus dem Gehäuse 6. Zum Halten der Schrauben 33 ist die Durchgangsbohrung 29 des Kupplungskopfes 2 wenigstens im Teilbereich als Gewindebohrung ausgebildet.

Um im Falle eines Eindringens des Bolzens 15 in die Durchgangsbohrung 29 des Kupplungskopfes 2 die Funktionstüchtigkeit der Anhängekupplung 1 nicht zu beeinträchtigen, sind die Enden 34 des Bolzens 15 ballig gerundet ausgebildet. Damit wird der Bolzen 15 im Falle eines Eindringens in die Durchgangsbohrung 29 des Kupplungskopfes 2 beim Verschieben des Kuppelzapfens 9 mit der gerundeten Endfläche gegen die Durchgangsbohrung 29 gedrückt und in Richtung der Mitte des Kuppelzapfens 9 verschoben. Ein Eindringen des Bolzens 15 in die vom Heck 30 aus gesehen rechtsseitige Durchgangsbohrung 29 des Kupplungskopfes 2 wird durch den gegenüber dem Bolzendurchmesser D_{B} verringerten Durchmesser D₂ der Durchgangsbohrung 29 zuverlässig verhindert.

Die ballige Ausbildung des rechtsseitigen Endes 34 des Bolzens 15 dient lediglich der vereinfachten Handhabung, da in diesem Fall der Bolzen 15 in beliebiger Orientierung in die Durchgangsbohrung 28 des Kuppelzapfens 9 eingetrieben werden kann. Der mittlere Bereich 35 des Bolzens 15 ist zylindrisch ausgebildet, so daß er in der ebenfalls zylindrisch ausgebildeten Durchgangsbohrung 28 des Kuppelzapfens 9 in jeder Lage einen ausreichend festen und sicheren Halt besitzt.

Zur zusätzlichen Lagesicherung des Bolzens 15 in der Durchgangsbohrung 28 des Kuppelzapfens 9 sind die Verschlußmittel 33 derart lang dimensioniert, daß sie dicht an den Kuppelzapfen 9 heranreichen. Dies verhindert ein Eindringen des zylindrischen Mittelabschnitts 35 des Bolzens 15 in die Durchgangsbohrung 29 des Kupplungskopfes 2, so daß die Anhängekupplung 1 dauerhaft funktionstüchtig bleibt. Alternativ könnten die Schrauben 33 auch kürzer dimensioniert werden, wobei sie durch entsprechend angeformte Stifte die volle Distanz haben. Diese Stifte bilden für den Bolzen 15 Endanschläge, wobei trotzdem die Zahl der Gewindegänge der Schrauben 33 nicht größer als zur Erzielung eines ausreichend festen Sitzes erforderlich ist.

In Abwandlung des Ausführungsbeispiels gemäß Figur 2 wäre es auch vorstellbar, an der Durchgangsbohrung 28 des Kuppelzapfens 9 einen Endanschlag vorzusehen, der zwar von einem Dorn, nicht jedoch vom Bolzen 15 durchdringbar ist. In diesem Fall könnte der Bolzen 15 bis zu diesem Anschlag in die Durchgangsbohrung 28 des Kuppelzapfens 9 eingetrieben werden, ohne daß dabei die Gefahr besteht, daß er auch nur im Teilbereich in die gegenüberliegende Durchgangsbohrung 29 des Kupplungskopfes 2 eindringt. Demnach könnte bei dieser Abwandlung die Durchgangsbohrung 29 des Kupplungskopfes 2 auch einen durchgehend gleichen Durchmesser D₁ aufweisen, der größer als der Bolzendurchmesser D_{B} ist.

Je nach Anwendungszweck ist es erforderlich, anstelle des in Figur 1 dargestellten Kuppelzapfens 9 mit zylindrischem Schaft 13 einen in Figur 3 dargestellten Kuppelzapfen 9' mit ballig gerundetem Schaft 13' einzusetzen. Ein ballig gerundeter Schaft 13' bietet den Vorteil, daß sein Außendurchmesser D_{S} genauer an den Innendurchmesser der nicht dargestellten Kuppelöse angepaßt ist und damit ein Schlagen durch Zug- und Druckkräfte vermieden wird. Aufgrund der balligen Rundung des Schaftes 13' ist die erforderliche Schwenkfreiheit zwischen dem Kuppelzapfen 9' und der Kuppelöse trotzdem gewährleistet. Dabei liegt der ballig gerundete Schaft 13' nur auf einer sehr kleinen Fläche praktisch punkt- oder linearförmig an der Kuppelöse an. Für lange Fahrten mit fester Anhängerführung wird der ballige Kuppelzapfen 9 bevorzugt verwendet. Für Kurzfahrten mit häufig wechselnden Anhängern wird man den zylindrischen Schaft 13 bevorzugen, der weniger paßgenau die Anhängeröse aufnimmt. Daher ist es erforderlich, je nach Anwendungsfall den Kuppelzapfen 9 mit zylindrischem Schaft 13 gegen den Kuppelzapfen 9' mit ballig gerundetem Schaft 13' auszutauschen oder umgekehrt.

### Bezugszeichenliste

- 1: Anhängekupplung
- 2: Kupplungskopf
- 3: Halteschaft
- 4: Höhenverstellvorrichtung
- 5: Kupplungsmaul
- 6: Gehäuse
- 7: Deckel
- 8: Führung
- 9, 9': Kuppelzapfen
- 10: unteres Ende des Kuppelzapfens
- 11: Zugösenauflage
- 12: Sicherungsring
- 13: zylindrischer Schaft des Kuppelzapfens
- 13': ballig gerundeter Schaft des Kuppelzapfens
- 14: Längsnut
- 15: Bolzen
- 16: Achse
- 17: Schwenkarm
- 18: Kulisse
- 19: Querschenkel der Kulisse
- 19': Längsschenkel der Kulisse
- 20: Feder
- 21: Achse
- 22: Lösehebel
- 23: Unterkante des Schwenkarms
- 24: Rastvertiefung
- 25: Tastzunge
- 26: Rastnase
- 27: Anschlag
- 28: Durchgangsbohrung des Kuppelzapfens
- 29: Durchgangsbohrung des Kupplungskopfes
- 30: Fahrzeugheck
- 31: Pfeil
- 32: Handhebel
- 33: Verschlußmittel
- 34: Ende des Bolzens
- 35: Mittlerer Bereich des Bolzens
- Dₛ: Außendurchmesser des Schaftes
- D₁,D₂: Durchmesser der Durchgangsbohrung
- D_{B}: Bolzendurchmesser
- V: Verschieberichtung des Kuppelzapfens

## Patentansprüche

1. Anhängekupplung für ein Zugfahrzeug mit einem Kupplungskopf (2), in dem ein Kuppelzapfen (9, 9') zwischen einer ein Kupplungsmaul (5) durchsetzenden Kuppelstellung und einer zurückgezogenen Lösestellung verstellbar geführt ist, wobei der Kuppelzapfen (9, 9') von einem schwenkbar gehaltenen Arm (17) bewegbar ist, der mittels einer Kulisse (18) einen am Kuppelzapfen (9, 9') gehaltenen, zu dessen Verschieberichtung (V) in etwa vertikal ausgerichteten Bolzen (15) erfaßt, der in einer Durchgangsbohrung (28) des Kuppelzapfens (9, 9') lösbar gehalten ist, **dadurch gekennzeichnet, daß** der Kupplungskopf (2) eine Durchgangsbohrung (29) aufweist, die in mindestens einer Stellung des schwenkbar gehaltenen Kuppelzapfens (9, 9') mit der darin vorgesehenen Durchgangsbohrung (28) fluchtet, wobei die Durchgangsbohrung (29) im Kupplungskopf (2) an wenigstens einer Seite des Kuppelzapfens (9, 9') einen Durchmesser (D₁) aufweist, der größer oder gleich dem Bolzendurchmesser (D_{B}) ist.

2. Anhängekupplung nach Anspruch 1, **dadurch gekennzeichnet, daß** die Durchgangsbohrung (29) des Kupplungskopfes (2) in der Kuppelstellung oder in der Lösestellung des Kuppelzapfens (9, 9') mit dem Bolzen (15) fluchtet.

3. Anhängekupplung nach Anspruch 1, **dadurch gekennzeichnet, daß** die Durchgangsbohrung (29) des Kupplungskopfes (2) in der Mittenstellung des Kuppelzapfens (9, 9') mit dem Bolzen (15) fluchtet.

4. Anhängekupplung nach mindestens einem der Ansprüche 1 bis 3, **dadurch gekennzeichnet, daß** der Durchmesser (D₁, D₂) der Durchgangsbohrung (29) des Kupplungskopfes (2) an einer Seite des Kuppelzapfens (9, 9') größer und an der anderen Seite kleiner als der Bolzendurchmesser (D_{B}) ist.

5. Anhängekupplung nach mindestens einem der Ansprüche 1 bis 4, **dadurch gekennzeichnet, daß** der Bolzen (15) in der Durchgangsbohrung (29) des Kuppelzapfens (9, 9') im Klemmsitz gehalten ist.

6. Anhängekupplung nach mindestens einem der Ansprüche 1 bis 5, **dadurch gekennzeichnet, daß** der Bolzen (15) in einem mittleren Bereich (35) zylindrisch und an mindestens einem Ende (34) ballig gerundet oder kegelig ausgebildet ist.

7. Anhängekupplung nach mindestens einem der Ansprüche 1 bis 6, **dadurch gekennzeichnet, daß** die im Kupplungskopf (2) vorgesehene Durchgangsbohrung (29) durch Verschlußmittel (33), vorzugsweise Schrauben, verschließbar ist.

8. Anhängekupplung nach Anspruch 7, **dadurch gekennzeichnet, daß** das Verschlußmittel (33) für den Bolzen (15) einen Endanschlag bildet, der ein Eindringen des zylindrischen Bereichs (35) des Bolzens (15) in die Durchgangsbohrung (29) des Kupplungskopfes (2) verhindert.

9. Anhängekupplung nach Anspruch 7 oder 8, **dadurch gekennzeichnet, daß** das im Kupplungskopf (2) festgelegte Verschlußmittel (33), vorzugsweise der Schraubbolzen, bis an die Wandung der Führung (8) des Kuppelzapfens (9) greift.

10. Anhängekupplung nach mindestens einem der Ansprüche 1 bis 9, **dadurch gekennzeichnet, daß** der Bolzen (15) an seinen beiden Enden (34) in der Durchgangsbohrung (29) des Kuppelzapfens (9, 9') gehalten ist und eine Längsnut (14) des Kuppelzapfens (9, 9') überbrückt.

## Claims

1. Trailer coupling for a towing vehicle having a coupling head (2) in which a coupling pin (9, 9') is adjustably guided between a coupling position, which penetrates a coupling jaw (5), and a retracted release position, the coupling pin (9, 9') being capable of being moved from a pivotably secured arm (7) which, by means of a connecting link (18), takes hold of a bolt (15) which is secured to the coupling pin (9, 9'), oriented approximately vertically with respect to the displacement direction (V) of said coupling pin (9, 9') and is detachably secured in a through-hole (28) of the coupling pin (9, 9'), **characterized in that** the coupling head (2) has a through-hole (29) which, in at least one position of the pivotably secured coupling pin (9, 9'), is aligned with the through-hole (28) provided therein, the through-hole (29) in the coupling head (2) having, on at least one side of the coupling pin (9, 9'), a diameter (D₁) which is greater than or equal to the diameter (D_{B}) of the bolt.

2. Trailer coupling according to Claim 1, **characterized in that** the through-hole (29) of the coupling head (2) is aligned with the bolt (15) in the coupling position or in the release position of the coupling pin (9, 9').

3. Trailer coupling according to Claim 1, **characterized in that** the through-hole (29) of the coupling head (2) is aligned with the bolt (15) in the central position of the coupling pin (9, 9').

4. Trailer coupling according to at least one of Claims 1 to 3, **characterized in that** the diameter (D₁, D₂) of the through-hole (29) of the coupling head (2) is greater than the diameter (D_{B}) of the bolt on one side of the coupling head (9, 9') and smaller than the diameter (D_{B}) of the bolt on the other side.

5. Trailer coupling according to at least one of Claims 1 to 4, **characterized in that** the bolt (15) is secured in the through-hole (29) of the coupling pin (9, 9') with a clamping fit.

6. Trailer coupling according to at least one of Claims 1 to 5, **characterized in that** the bolt (15) is cylindrical in a central region (35) and is spherically rounded or cone shaped at at least one end (34).

7. Trailer coupling according to at least one of Claims 1 to 6, **characterized in that** the through-hole (29) provided in the coupling head (2) can be closed off by closure means (33), preferably screws.

8. Trailer coupling according to Claim 7, **characterized in that** the closure means (33) for the bolt (15) forms an end stop which prevents the cylindrical region (35) of the bolt (15) penetrating the through-hole (29) of the coupling head (2).

9. Trailer coupling according to Claim 7 or 8, **characterized in that** the closure means (33), preferably the screw bolt, secured in the coupling head (2) engages as far as the wall of the guide (8) of the coupling pin (9).

10. Trailer coupling according to at least one of Claims 1 to 9, **characterized in that** the bolt (15) is secured, at its two ends (34) in the through-hole (29) of the coupling pin (9, 9') and spans a longitudinal groove (14) of the coupling pin (9, 9').

## Revendications

1. Attelage de remorque pour un véhicule tracteur avec une tête d'accouplement (2), dans laquelle est guidé un tourillon d'accouplement (9, 9') avec une possibilité de déplacement entre une position d'accouplement traversant une fourche d'attelage (5) et une position de déblocage retirée, le tourillon d'accouplement (9, 9') pouvant être déplacé par un bras (17) maintenu avec une possibilité de pivotement, qui intercepte au moyen d'une coulisse (18) un axe (15) maintenu sur le tourillon d'accouplement (9, 9'), orienté à peu près verticalement par rapport au sens de déplacement (V) de ce dernier, et maintenu de façon amovible dans un trou de passage (28) du tourillon d'accouplement (9, 9'), **caractérisé en ce que** la tête d'accouplement (2) présente un trou de passage (29), qui s'aligne dans au moins une position du tourillon d'accouplement (9, 9') maintenu avec une possibilité de pivotement sur le trou de passage (28) prévu dans ce dernier, le trou de passage (29) dans la tête d'accouplement (2) présentant sur au moins un côté du tourillon d'accouplement (9, 9') un diamètre (D₁) supérieur ou égal au diamètre (D_{B}) de l'axe.

2. Attelage de remorque suivant la revendication 1, **caractérisé en ce que** le trou de passage (29) de la tête d'accouplement (2) s'aligne sur l'axe (15) dans la position d'accouplement ou dans la position de déblocage du tourillon d'accouplement (9, 9').

3. Attelage de remorque suivant la revendication 1, **caractérisé en ce que** le trou de passage (29) de la tête d'accouplement (2) s'aligne sur l'axe (15) dans la position centrale du tourillon d'accouplement (9, 9').

4. Attelage de remorque suivant l'une au moins des revendications 1 à 3, **caractérisé en ce que** le diamètre (D₁, D₂) du trou de passage (29) de la tête d'accouplement (2) est plus élevé sur un côté du tourillon d'accouplement (9, 9') et moins élevé sur l'autre côté que le diamètre (D_{B}) de l'axe.

5. Attelage de remorque suivant l'une au moins des revendications 1 à 4, **caractérisé en ce que** l'axe (15) est maintenu en ajustement pressé dans le trou de passage (29) du tourillon d'accouplement (9, 9').

6. Attelage de remorque suivant l'une au moins des revendications 1 à 5, **caractérisé en ce que** l'axe (15) a une réalisation cylindrique dans une zone centrale (35) et arrondie convexe ou conique sur au moins une extrémité (34).

7. Attelage de remorque suivant l'une au moins des revendications 1 à 6, **caractérisé en ce que** le trou de passage (29) prévu dans la tête d'accouplement (2) peut être fermé par des moyens d'obturation (33), de préférence des vis.

8. Attelage de remorque suivant la revendication 7, **caractérisé en ce que** le moyen d'obturation (33) forme pour l'axe (15) une butée de fin de course, qui empêche une pénétration de la zone cylindrique (35) de l'axe (15) dans le trou de passage (29) de la tête d'accouplement (2).

9. Attelage de remorque suivant l'une des revendications 7 et 8, **caractérisé en ce que** le moyen d'obturation (33) fixé dans la tête d'accouplement (2), de préférence le boulon fileté, s'engage jusqu'à la paroi de la glissière (8) du tourillon d'accouplement (9).

10. Attelage de remorque suivant l'une au moins des revendications 1 à 9, **caractérisé en ce que** l'axe (15) est maintenu sur ses deux extrémités (34) dans le trou de passage (29) du tourillon d'accouplement (9, 9') et ponte une rainure longitudinale (14) du tourillon d'accouplement (9, 9').
